# EUROPÄISCHE PATENTSCHRIFT

(11) **EP 1 214 211 B1**
(45) Veröffentlichungstag und Bekanntmachung des Hinweises auf die Patenterteilung: **31.12.2008**
(21) Anmeldenummer: 00962372.9
(22) Anmeldetag: 24.08.2000
(51) Int. Cl.: B60H 1/00, B60K 35/00, B60R 16/02

(54) **ANZEIGE- UND BEDIENEINHEIT FÜR EINE STANDHEIZUNG IN EINEM KRAFTFAHRZEUG**
DISPLAY AND CONTROL UNIT FOR AN AUXILIARY HEATER IN A MOTOR VEHICLE
UNITE DE VISUALISATION ET DE SERVICE POUR CHAUFFAGE AUXILIAIRE D'AUTOMOBILE

(30) Priorität: 03.09.1999 DE 19941948
(43) Veröffentlichungstag der Anmeldung: 19.06.2002
(73) Patentinhaber: Volkswagen Aktiengesellschaft, 38436 Wolfsburg (DE)
(72) Erfinder: MÜLLER, Kai, 38531 Rötgesbüttel (DE); HEIMERMANN, Matthias, 38302 Wolfenbüttel (DE); CRULL, Torsten, 38106 Braunschweig (DE)
(74) Vertreter: Patentanwälte Bressel und Partner
(86) Internationale Anmeldenummer: PCT/EP2000/008252
(87) Internationale Veröffentlichungsnummer: WO 2001/017808

(56) Entgegenhaltungen:
- DE-A- 19 735 317
- DE-A- 19 735 976
- DE-A- 19 816 269
- US-A- 5 350 114

## Beschreibung

Die Erfindung betrifft eine Anzeige- und Bedieneinheit für eine Standheizung in einem Kraftfahrzeug.

Die Funktion von Standheizungen ist, daß auch bei abgestelltem Motor der Fahrgastinnenraum beheizbar ist. Im Regelfall ist hierzu ein einfacher Schalter im Kraftfahrzeug angeordnet, mittels dessen die Standheizung an- und ausschaltbar ist.

Aus der DE 197 35 317 A1 ist eine Anzeigeeinheit für eine Fahrzeug- Heiz- oder Klimaanlage bekannt, mit einem Bordmonitor, auf welchem die gewählte Temperatur für einzelne, bezüglich eines Fahrzeuginsassen definierte Zonen durch unterschiedliche Farbgestaltung eines im wesentlichen balkenförmigen Symbols darstellbar ist, wobei durch unterschiedliche Abmessungen der einzelnen balkenförmigen Symbole die den jeweiligen Zonen zugeteilte Luftmenge dargestellt wird. Nachteilig an der Nutzung von multifunktionalen Bordmonitoren, die beispielsweise zusätzlich zur Darstellung von Navigationsdaten, Audio- Video- Einstellungen und anderen Komfortkomponenten genutzt werden, ist daß die verschiedenen Menüs hierarchisch untergliedert sind. Eine Standheizung wird in der Druckschrift nicht erwähnt.

Aus der gettungsgemäßen DE 197 35 976 A1 ist eine Anzeige- und Bedieneinheit für eine Standheizung in einem Kraftfahrzeug bekannt, wobei die Anzeigeeinheit als Bordmonitor eines multifunktionalen Infotainments ausgebildet ist, die Standheizung mit einem Timer ausgebildet ist, mittels dessen eine temporäre Einschaltung der Standheizung programmierbar ist, wobei eine Heizdauer eingebbar ist.

In modernen Kraftfahrzeugen sind einfach programmierbare Standheizungen bekannt, bei denen die Ein- und Ausschaltung für bestimmte Zeitpunkte mittels eines einfachen Timers eingebbar sind. Dadurch kann der Fahrer rechtzeitig rechtzeitig vor Fahrtbeginn das Kraftfahrzeug heizen, so daß beim Einsteigen bereits eine angenehme Temperatur herrscht. Die Anzeige- und Bedieneinheit ist dabei als separate Bedieneinheit innerhalb der Fahrzeugkonsole angeordnet. Aufgrund dieser separaten Ausbildung ist die Anzeige-und Bedieneinheit entsprechend klein und kompakt gehalten, so daß sich diese Baueinheit einfach in Kraftfahrzeugen nachrüsten läßt. Nachteilig an den bekannten Anzeige- und Bedieneinheiten für Standheizungen ist, daß diese nur eine beschränkte Funktionalität aufweisen und schwer bedienbar sind.

Der Erfindung liegt daher das technische Problem zugrunde, eine Anzeige- und Bedieneinheit für eine Standheizung in einem Kraftfahrzeug zu schaffen, die leichter zu bedienen ist.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Durch die Ausbildung der Anzeigeeinheit als Bordmonitor eines multifunktionalen Infotainments kann der Nutzer einerseits auf einen größeren Monitor zurückgreifen, was die Ablesbarkeit erhöht, und andererseits ist eine höhere Funktionalität mittels des leistungsstärkeren Prozessors des Infotainments für die Standheizung ohne großen zusätzlichen Aufwand möglich. Dabei kann die Standheizung beispielsweise ohne größeren Aufwand als Unterfunktion der Heiz- und / oder Klimaregelung in ein vorhandenes Infotainment integriert werden.

In einer bevorzugten Ausführungsform ist die Standheizung mit einem Timer ausgebildet, über den verschiedene Wochentage mit unterschiedlichen Heizzeiten programmierbar sind.

Da die Standheizung über die Batterie betrieben wird, wird die programmierbare Heizdauer nach oben auf beispielsweise eine halbe Stunde beschränkt, um somit ein versehentliches Entladen der Batterie zu vermeiden. Anstelle einer einstellbaren Heizdauer kann auch eine Automatik benutzt werden, wozu ein Temperatursollwert vorgegeben wird, der zu einem bestimmten Zeitpunkt erreicht werden soll. Hierzu wird dann die Innenraumtemperatur erfaßt und berechnet, wann die Standheizung eingeschaltet werden muß, um den Sollwert zu der eingegebenen Zeit zu erreichen. Hierbei können ebenfalls Beschränkungen hinsichtlich der Heizdauer vorgegeben sein, d.h. die Standheizung erkennt nicht realisierbare Vorgaben und reduziert diese selbsttätig.

Zur Einstellung der verschiedenen Funktionalitäten wird vorzugsweise ein als Drehschalter, insbesondere als Dreh- Druckknopf ausgebildetes Bedienelement verwendet.

Die Erfindung wird nachfolgend anhand eines bevorzugten Ausführungsbeispieles näher erläutert. Die Fig. zeigen:
- Fig. 1: ein Grundmenü einer Heiz- und Klimaregelung,
- Fig. 2: ein Untermenü des Grundmenüs gemäß Fig. 1,
- Fig. 3: ein Grundmenü der Standheizung als Untermenü des Menüs gemäß Fig. 2,
- Fig. 4: ein Menü zur Einstellung der Heizdauer,
- Fig. 5: ein Menü zur Einstellung eines Wochentages und
- Fig. 6: ein Menü zur Einstellung der Startzeit.

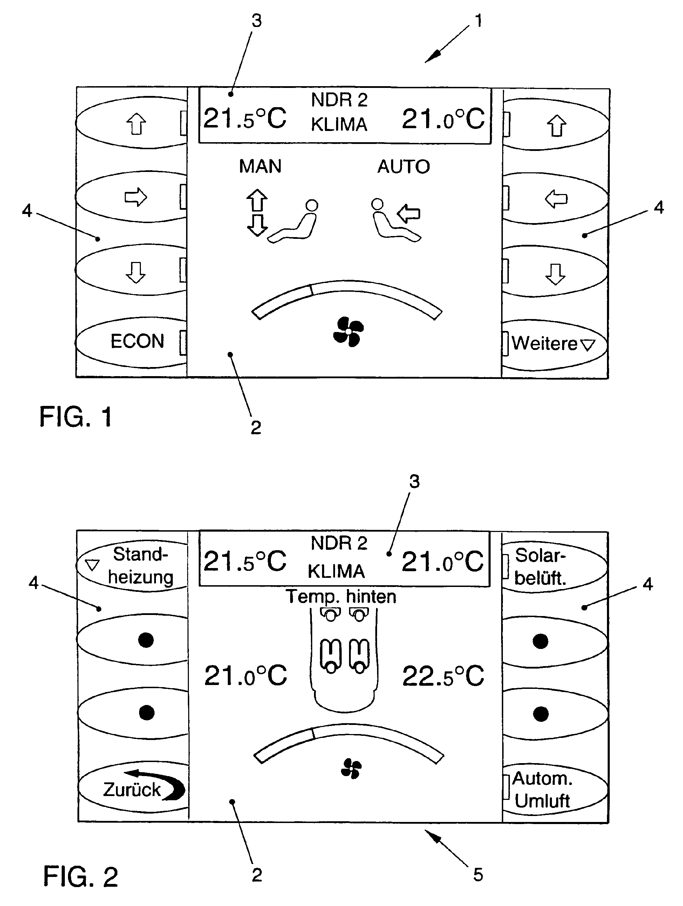

In der Fig. 1 ist ein Grundmenü 1 einer Heiz- und Klimaregelung gezeigt, das auf einem Bordmonitor eines Infotainments dargestellt ist. Das Grundmenü 1 umfaßt einen Anzeigebereich 2, eine Statuszeile 3 und eine Belegungszuordnung 4. Im Anzeigebereich 2 sind zwei piktogrammförmige Figuren dargestellt, denen Pfeile zugeordnet sind, die die Strömungsrichtungen eines Gebläses symbolisieren. Darunter ist ein gebogenes Balkendiagramm mit einem Piktogramm dargestellt, das sie eingestellte Gebläsestärke zeigt. In der Statuszeile 3 sind die eingestellte Temperatur für Fahrer und Beifahrer, ein aktueller Radiosender und der Name des aktuellen Grundmenüs dargestellt. Die Belegungszuordnung 4 signalisiert die Funktionsbelegung von multifunktionalen Bedienelementen, die neben dem Bordmonitor angeordnet sind, sowie ob diese aktuell aktiv sind. Ist eine Einstellung aktiv, so wird diese mittels eines Leuchtelementes optisch hervorgehoben. Rechts unten ist in der Belegungszuordnung die Funktion "Weitere" dargestellt, wobei das kleine Dreieck andeutet, daß zu dieser Funktion eine Untermenü existiert. Wird nun das zugehörige Bedienelement betätigt, so wird das Untermenü 5 auf dem Bordmonitor dargestellt, was in Fig. 2 dargestellt ist.

In der Fig. 2 ist piktogrammförmig und alphanumerisch die Temperaturverteilung im Fond dargestellt, die durch die jeweils mittig angeordneten Bedienelemente nach oben bzw. nach unten verstellt werden kann. Des weiteren kann eine im Autodach angeordnete Solarbelüftung und eine Umluftvorrichtung ein- bzw. ausgeschaltet werden. Im dargestellten Beispiel ist die Solarbelüftung ausgeschaltet und die Umluftvorrichtung eingeschaltet, so daß keine Luft mehr von außen angesaugt wird. Mittels des Bedienelementes links unten kann der Nutzer wieder in das Grundmenü 1 zurückkehren. Mittels des Bedienelementes links oben, kann der Nutzer in ein Grundmenü 6 für die Standheizung wechseln, was wieder durch das kleine Dreieck symbolisiert wird.

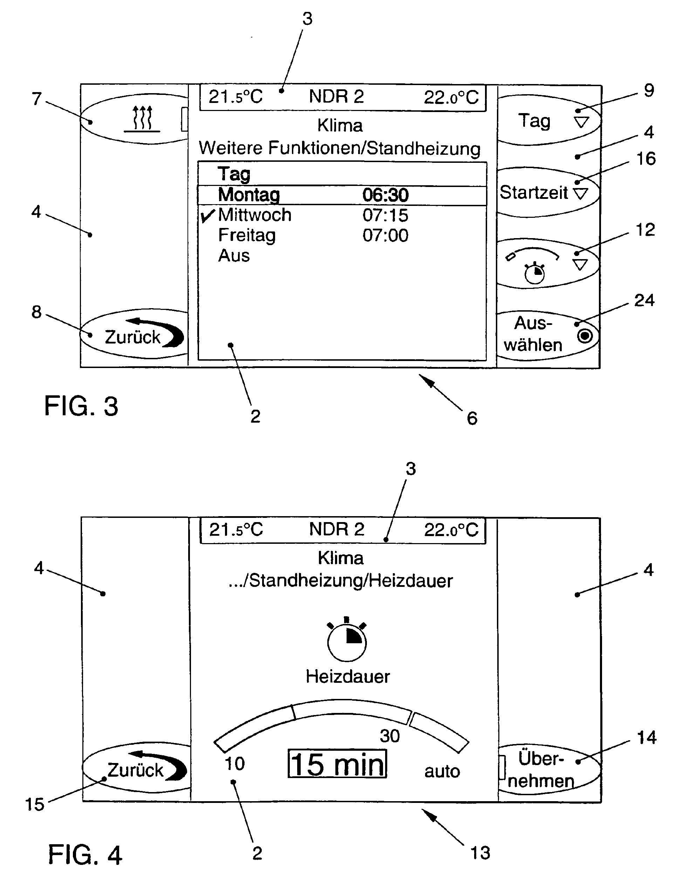

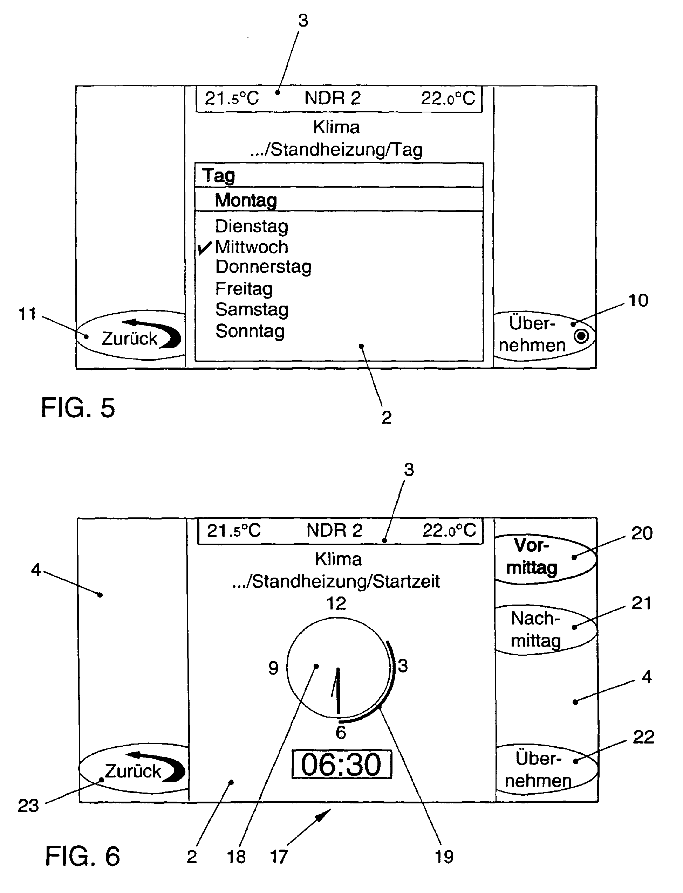

Das Grundmenü 6 für die Standheizung ist in Fig. 3 dargestellt. Dabei ist im Anzeigebereich 2 die aktuelle Timerprogrammierung und in der Belegungszuordnung 4 die Funktionalitätsbelegung der seitlich angeordneten und nicht dargestellten Bedienelemente dargestellt. Das Feld 7 stellt die Standheizung dar. Wird das zugehörige Bedienelement betätigt, so wird die Standheizung ein- bzw. ausgeschaltet. Mittels des dem Feld 8 zugeordneten Bedienelementes kann der Nutzer wieder zum Untermenü 5 zurückkehren. Um den Speicherbedarf für die Timerprogrammierung gering zu halten, ist die Anzahl der parallelen Timerprogrammierungen beispielsweise auf drei beschränkt, wie im Beispiel gemäß Fig. 3 dargestellt, wobei nur die Timerprogrammierung für Mittwoch aktiv ist, was durch das Häkchen symbolisiert ist. Möchte der Nutzer einen anderen Tag programmieren, so betätigt dieser das dem Feld 9 zugeordnete Bedienelement, wodurch dieser in das Menü gemäß Fig. 5 wechselt. Mittels eines zentralen Drehknopfes mit Raststellungen kann der Nutzer sich dann in der Liste bewegen und den entsprechenden Tag auswählen. Um nun den ausgewählten Tag in die Timerprogrammierung zu übernehmen, hat der Nutzer nun zwei Möglichkeiten, was durch den umkreisten Punkt im Feld 10 symbolisiert ist. Hierzu betätigt der Nutzer entweder das dem Feld 10 zugeordnete Bedienelement oder eine übergeordnete Enter-Taste am Drehknopf. Dazu ist der Drehknopf vorzugsweise als Dreh- Druckknopf ausgebildet, so daß durch die axiale Drückbewegung die Enter- Funktion ausgelöst wird. Mittels des dem Feld 11 zugeordneten Bedienelementes kann der Nutzer wieder zu dem Grundmenü 6 gemäß Fig. 3 zurückkehren.

Mittels des dem Feld 12 zugehörigen Bedienelementes kann ein Menü 13 für die Heizdauer aufgerufen werden, was in Fig. 4 dargestellt ist. Mittels des Dreh-Druckknopfes kann die Heizdauer in einem Bereich von 10-30 Minuten eingestellt werden, wobei die aktuelle Heizdauer als Balkendiagramm und alphanumerisch dargestellt wird.
Dreht der Nutzer bis 30 Minuten, so wechselt die Einstellung bei der nächsten Raststufe auf "auto", d.h. es findet eine automatische Regelung auf einen Temperatursollwert statt. Hierzu muß entweder in einem nicht dargestellten Menü ein Temperatursollwert eingegeben werden, oder aber als Temperatursollwert werden stets die letzten aktuellen Einstellungen für die Temperaturregelung aus der Statuszeile 3 genommen. Die Funktionen der Felder 14 und 15 sind analog der Felder 10 und 11 der Fig. 5.

Mittels des dem Feld 16 zugeordneten Bedienelementes kann die Startzeit eingestellt werden, wozu ein Menü 17 gemäß Fig. 6 aufgerufen wird. Im Anzeigebereich 2 ist hierzu eine piktogrammförmige Uhr 18 angeordnet, um die ein gekrümmter Balken 19 angeordnet ist, dessen Länge der eingestellten Heizdauer entspricht. Durch Drehung des Dreh- Druckknopfes bewegt sich der Balken 19 um die Uhr 18. Im dargestellten Beispiel beginnt die Standheizung um 06:10 zu heizen und schaltet sich um 06:30 ab. Möchte nun der Nutzer beispielsweise 07:10 beginnen und um 07:30 enden, so dreht er einfach mittels des Dreh- Druckknopfes den Balken 19 einmal um 360° um die Uhr 18. Vorzugsweise ist der Balken 19 unterschiedlich farblich abgestuft ausgebildet, um den jeweils zu einem Zeitpunkt erreichten Temperaturbereich zu symbolisieren. Beispielsweise ist der Balken 19 am Anfang blau und geht sukzessive in rot über. Mittels der den Feldern 20, 21 zugeordneten Bedienelemente kann der Nutzer zwischen Vormittag und Nachmittag wechseln. Die Funktionen der Bedienelemente der Felder 22 und 23 ist wieder analog der Felder 10 und 11 bzw. 14 und 15. Die eingestellte Timerprogrammierung kann dann mittels des dem Feld 24 zugeordneten Bedienelementes oder durch die Axialbewegung des Dreh- Druckknopfes ausgewählt werden bzw. deaktiviert werden.

## Patentansprüche

1. Anzeige- und Bedieneinheit für eine Standheizung in einem Kraftfahrzeug, wobei die Anzeigeeinheit als Bordmonitor eines multifunktionalen Infotainments ausgebildet ist, die Standheizung mit einem Timer ausgebildet ist, mittels dessen eine temporäre Einschaltung der Standheizung programmierbar ist, wobei eine Heizdauer eingebbar ist,
**dadurch gekennzeichnet, daß**
die Heizdauer als gekrümmter Balken (19) an einer piktogrammförmigen Uhr (18) visualisiert ist, der mittels eines Bedienelementes auf dem Umfang der Uhr (18) verschiebbar ist.

2. Anzeige- und Bedieneinheit nach Anspruch 1, **dadurch geknnzeichnet, daß** das Bedienelement als Drehknopf (18) ausgebildet ist.

3. Anzeige- und Bedienelement nach Anspruch 2, **dadurch gekennzeichnet, daß** der Drehknopf (18) mit Raststellungen ausgebildet ist.

4. Anzeige- und Bedieneinheit nach Anspruch 2 oder 3, **dadurch gekennzeichnet, dass** der Drehknopf (18) als Druck-Drehknopf ausgebildet ist.

5. Anzeige- und Bedieneinheit nach einem der vorangegangenen Ansprüche, **dadurch gekennzeichnet, dass** die Heizdauer nach oben beschränkt ist.

6. Anzeige- und Bedieneinheit nach einem der vorangegangenen Ansprüche, **dadurch gekennzeichnet, daß** ein Temperatursollwert eingebbar ist.

7. Anzeige- und Bedieneinheit nach einem der vorangegangenen Ansprüche, **dadurch gekennzeichnet, daß** die Standheizung für einzelne Wochentage programmierbar ist.

## Claims

1. Display and control unit for an engine-independent heater in a motor vehicle, wherein the display unit is embodied as an on-board monitor of a multifunctional infotainment system, and the engine-independent heater is embodied with a timer by means of which temporary switching on of the engine-independent heater can be programmed, wherein it is possible to input a heating duration, **characterized in that** the heating duration is visualized as a curved bar (19) on a clock (18) in the form of a pictogram, which bar (19) can be moved onto the circumference of the clock (18) by means of a control element.

2. Display and control unit according to Claim 1, **characterized in that** the control element is embodied as a rotary knob (18).

3. Display and control unit according to Claim 2, **characterized in that** the rotary knob (18) is embodied with latching positions.

4. Display and control unit according to Claim 2 or 3, **characterized in that** the rotary knob (18) is embodied as a push and turn rotary button.

5. Display and control unit according to one of the preceding claims, **characterized in that** the heating duration is limited in the upward direction.

6. Display and control unit according to one of the preceding claims, **characterized in that** a temperature setpoint value can be input.

7. Display and control unit according to one of the preceding claims, **characterized in that** the engine-independent heater can be programmed for individual days of the week.

## Revendications

1. Unité d'affichage et de commande pour un chauffage d'appoint dans un véhicule automobile, l'unité d'affichage étant réalisée sous la forme d'un moniteur de bord d'un dispositif d'info-spectacle multifonction, le chauffage d'appoint étant réalisé avec une minuterie au moyen de laquelle peut être programmée une mise en marche temporaire du chauffage d'appoint, la durée du chauffage pouvant être saisie, **caractérisée en ce que** la durée du chauffage est visualisée sous la forme d'une barre curviligne (19) sur une horloge pictographique (18), laquelle peut être déplacée sur le pourtour de l'horloge (18) au moyen d'un élément de commande.

2. Unité d'affichage et de commande selon la revendication 1, **caractérisée en ce que** l'élément de commande est réalisé sous la forme d'un bouton rotatif (18).

3. Unité d'affichage et de commande selon la revendication 2, **caractérisée en ce que** le bouton rotatif (18) est réalisé avec des positions d'enclenchement.

4. Unité d'affichage et de commande selon la revendication 2 ou 3, **caractérisée en ce que** le bouton rotatif (18) est réalisé sous la forme d'un bouton-poussoir rotatif.

5. Unité d'affichage et de commande selon l'une des revendications précédentes, **caractérisée en ce que** la durée du chauffage est limitée vers le haut.

6. Unité d'affichage et de commande selon l'une des revendications précédentes, **caractérisée en ce qu'**il est possible de saisir une valeur de consigne de la température.

7. Unité d'affichage et de commande selon l'une des revendications précédentes, **caractérisée en ce que** le chauffage d'appoint peut être programmé pour des jours individuels de la semaine.
